# EUROPEAN PATENT SPECIFICATION

(11) **EP 3 361 790 B1**
(45) Date of publication and mention of the grant of the patent: **04.12.2019**
(21) Application number: 17155980.0
(22) Date of filing: 14.02.2017
(51) Int. Cl.: H04W 52/34, H04W 52/14, H04W 52/28, H04W 52/36

(54) **USER EQUIPMENT WITH ADAPTIVE TRANSMISSION POWER SCALING BASED ON DECODING CONFIDENCE**
BENUTZERGERÄT MIT ADAPTIVER SENDELEISTUNGSSKALIERUNG AUF BASIS VON DECODIERUNGSVERTRAUEN
ÉQUIPEMENT UTILISATEUR AVEC ÉCHELONNEMENT DE PUISSANCE DE TRANSMISSION ADAPTATIF BASÉ SUR LA FIABILITÉ DE DÉCODAGE

(43) Date of publication of application: 15.08.2018
(73) Proprietor: Intel IP Corporation, Santa Clara, CA 95054 (US)
(72) Inventor: YU, Zhibin, 82008 Unterhaching (DE); VISHWANATHAN, Narayan, San Diego, CA 92128 (US); JIANG, Wei, Xi'an 61, 710075 (CN); FLIESS, Thomas, 01097 Dresden (DE); JU, Ziyang, 81241 Munich (DE)
(74) Representative: Lambsdorff & Lange Patentanwälte Partnerschaft mbB

(56) References cited:
- WO-A1-2015/116866
- US-A1- 2010 273 520
- US-A1- 2015 312 074

## Description

### FIELD

The disclosure relates to a user equipment (UE) with uplink power scaling based on a decoding confidence of a base station (BS) and a method for power scaling of a UE. The disclosure particularly relates to techniques of adaptive transmission power scalings based on UCI (Uplink Control Information) decoding confidence estimation for LTE (Long Term Evolution) uplink carrier aggregations.

### BACKGROUND

In Wireless Networks uplink carrier aggregation can be configured for uplink transmissions on both the primary carrier and the secondary carrier on the same subframe. The Uplink transmission power over each cell follows a specified power control procedure which may result in different power levels on the primary and secondary cells in the same subframe where the total power is constrained. There are situations in which the requested transmission power for high priority carriers is already close to or even exceeds the total power constraint. Then, there is no power budget left for the low priority carriers at all. The result is that the low priority carriers are potentially not heard by the eNB (base station) at all. Hence, there is a need to provide a concept for an efficient power scaling to avoid the above described situations.

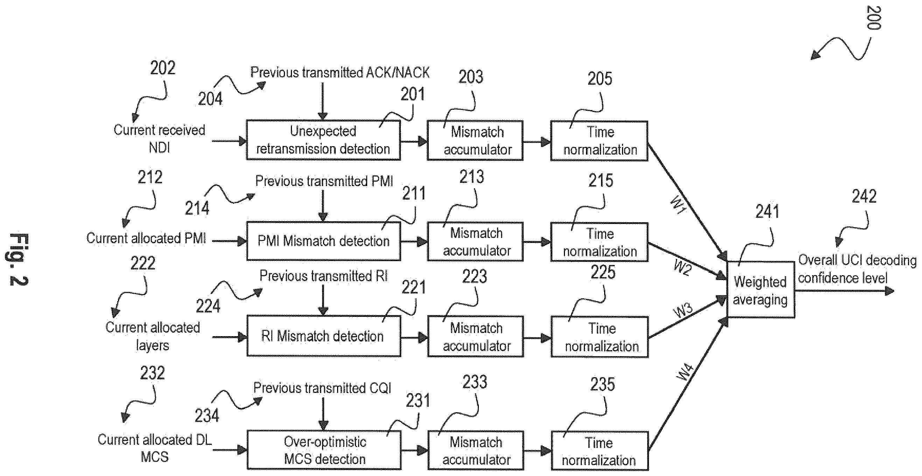

Document US 2010/273 520 A1 refers to power scaling for multi-carrier wireless terminals. Mechanisms are described for power scaling when a multi-carrier wireless transmit/receive unit (WTRU) reaches its maximum output power. Fig. 2 shows a block diagram of a WTRU and a Node-B. The WTRU is in communication with the Node-B using multiple uplink carriers and multiple downlink carriers. WTRU and Node-B are configured to perform power scaling on multiple uplink carriers.

### SUMMARY OF THE INVENTION

The invention is defined by the appended independent claims. Dependent claims constitute embodiments of the invention. Any other subject-matter outside the scope of the claims is to be regarded as an example not in accordance with the invention.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.
Fig. 1a is a high level block diagram of a mobile device architecture and base station.
Fig. 1b is a high level block diagram of a user equipment (UE) 100 according to the disclosure.
Fig. 2 is a block diagram illustrating a UCI decoding confidence estimator module 200 according to an implementation form.
Fig. 3 is a schematic diagram illustrating the control flow for an adaptive transmission power scaling controller module 300 according to an implementation form.
Fig. 4 is a block diagram of a User Equipment (UE) 400 according to an implementation form.
Fig. 5 is a schematic diagram of a method 500 for power scaling of a User Equipment (UE) according to an implementation form.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims. The following terms, abbreviations and notations will be used herein:
- UCI:: Uplink Control Information
- DCI:: Downlink Control Information
- CA:: Carrier Aggregation
- Pcell:: Primary Cell (of carrier aggregation)
- Scell:: Secondary Cell (of carrier aggregation)
- PMI:: Precoding Matrix Indicator
- RI:: Rank Indicator
- CQI:: Channel Quality Indicator
- NDI:: New Data Indicator
- HARQ:: Hybrid Automatic Repeat Request
- ACK/NACK: Acknowledgement/Non-Acknowledgement
- RF:: Radio Frequency
- MCS:: Modulation and Coding Scheme
- UE:: User Equipment, cellular handset
- eNB, BS:: Base Station
- LTE:: Long Term Evolution
- PUSCH:: Physical Uplink Shared Channel
- UL:: Uplink
- DL:: Downlink
- HW:: Hardware
- SW:: Software

It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The techniques described herein may be implemented in wireless communication networks, in particular communication networks based on mobile communication standards such as LTE, in particular LTE-A and/or OFDM and successor standards such as 5G. The methods are also applicable for high speed communication standards from the 802.11 family according to the WiFi alliance, e.g. 802.11ad and successor standards. The methods and devices described below may be implemented in electronic devices such as cellular handsets, mobile or wireless devices (or mobile stations or User Equipments (UE)). The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

In the following techniques for power scaling are described that may be implemented for LTE uplink carrier aggregation. For LTE uplink carrier aggregation, LTE UE can be scheduled by the eNB for uplink transmissions over PUSCH (Physical Uplink Shared Channel) on both the primary carrier and the secondary carriers on the same subframe when Uplink carrier aggregation is enabled. The Uplink transmission power over each cell follows the power control procedure specified in section 5.1.1.1 of 3GPP technical specification TS 36.213. This could result in different power levels on the primary and secondary cells in the same subframe. However the total power from the UE is always constrained to satisfy the limits of total configured maximum output power P_{CMAX} where P_{CMAX} is defined in section 6.2.5A of 3GPP technical specification TS 36.101. In power limited scenarios, the combined requested power over both carriers could exceed the limits of P_{CMAX}. In such cases section 5.1.1.1 of technical specification TS 36.213 specifies the priority rules to scale down the individual powers per cell such that the sum of the scaled power per cell is below P_{CMAX}. The goal is that the cell carrying UCI is prioritized with higher transmission power than the cells without UCI.

The priority can be defined as follows: PUSCH transmission Cell with UCI > PUSCH transmission Cell without UCI, where UCI means uplink control information (including DL ACK/NACK feedbacks and CSI feedbacks).

The problem is that, when the requested transmission power for high priority carriers are already close to or even exceeds P_{CMAX}, then there is no power budget left for applying down-power scaling for the low priority carriers at all. The result is that the down-scaled low priority carriers are potentially not heard by eNB at all. As an example suppose the UE is configured with carrier aggregation on the Uplink with one primary cell (PCell) and one secondary cell (Scell). In a case where the transmission power on the primary carrier reaches P_{CMAX} and PUSCH on the primary carrier contains UCI applying the full scaling priority results in no transmission power left for the UE to allocate to the secondary carrier. Thus, the secondary carrier is effectively blanked which would drastically reduce the throughput (UL throughput drop can be up-to 50%).

In this specific case, 3GPP standard reserves certain flexibility for UE implementation such that UE can partially down-scale the transmission power of high priority cells so that low priority cells still get partial transmission power. This avoids significant drop of UL throughput. However, the problem is how to find the optimal tradeoff: If UE allocates too little power to low priority cells, the UL throughput will still be bad due to low SINR of low priority cells. But if UE allocates too much power for low priority cells without UCI information, then it will degrade the UCI decoding performance in the eNB side, which will result in huge performance degradation for DL. Applying the hereinafter presented techniques for power scaling provides an optimal tradeoff for maintaining high transmission power for high priority cells and still providing partial transmission power for low priority cells.

The main idea is to use an adaptive transmission power scaling approach for the carrier with UCI wherein the adaptation is based on an UE estimated UCI decoding confidence level for the eNB side: When UE estimates that very few UCI decoding failings (high confidence) in eNB, then more transmission power may be allocated from PCell transmission (with UCI) to SCell transmission (without UCI). When UE estimates that massive UCI decoding failings (low confidence) in eNB side, then UE should fully prioritize the transmission to PCell to minimize the impacts on DL performance, while at the same time allocating less or even no transmission power to SCell.

The UCI decoding confidence estimation can be performed by monitoring DL behaviors which can be correlated with "wrongly decoded UCIs" in eNB side. For example, UE can apply the following metrics:

A first metric that may be applied evaluates the counter of unexpected DL retransmission requests which indicates DL ACK/NACK feedback is not being successfully decoded by eNB.

A second metric that may be applied evaluates the counter of instances when eNB did not follow PMI or RI reports sent by UE. According to field experience, eNB always follows PMI/RI requests if it successfully decodes PMI/RI bits.

A third metric that may be applied evaluates the counter of instances when eNB schedules an over-optimistic MCS allocation (i.e., a very high MCS although UE previously reports a very poor CQI). In the field eNB does not always follow CQI reports, for example for traffic balancing purpose even UE is in good channel conditions and has high CQI reports, it could still be allocated with low MCS. However, an over-optimistic MCS allocation still lowers down confidence of correct decoding of CQI reports in eNB side.

Note that UCIs are usually not protected by CRC (cyclic redundancy check). I.e. there is no CRC for ACK/NACK or RI, CRC for PMI/CQI only if it exceeds certain number of bits. Therefore, eNB usually does not know if it decodes UCI wrongly, this makes the power scaling according to this disclosure valuable because UE can estimate the failings by the herein presented techniques.

Based on the above metrics UE can form a combined estimate of the UCI decoding confidence level for the eNB, and can further use that estimate to determine its power scaling. Instead of using a fixed power allocation scheme which has a high penalty on the UL traffic, the scheme disclosed hereinafter can maximize UL throughput while minimizing impact on DL throughput.

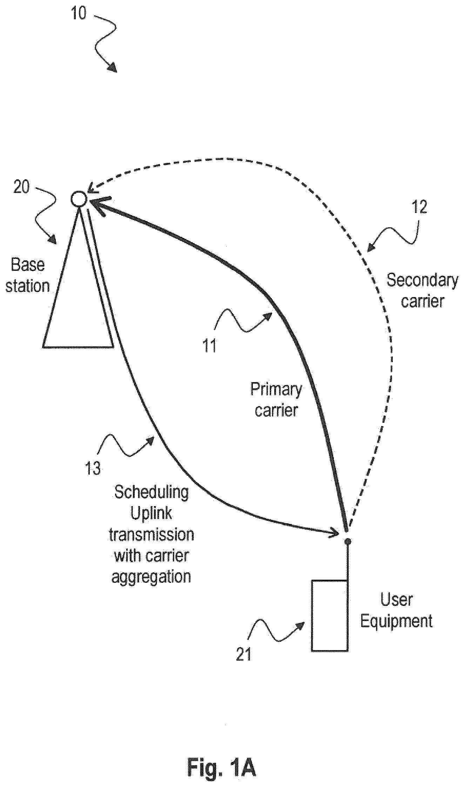

Fig. 1a is a high level block diagram 10 of a mobile device architecture and base station. The base station 20 can schedule 13 uplink transmission with carrier aggregation on the user equipment 21 for uplink transmissions on both the primary carrier 11 and the secondary carrier 12 on the same subframe. The Uplink transmission power over each cell follows a specified power control procedure which may result in different power levels on the primary and secondary cells in the same subframe where the total power is constrained. The base station 20 can configure the uplink transmission power such that situations in which the requested transmission power for high priority carriers is already close to or even exceeds the total power constraint can be avoided as described in the following. The base station 20 can configure the uplink power transmission in order to leave a power budget for the low priority carriers, e.g. the secondary carrier 12 as exemplary depicted in Fig. 1a.

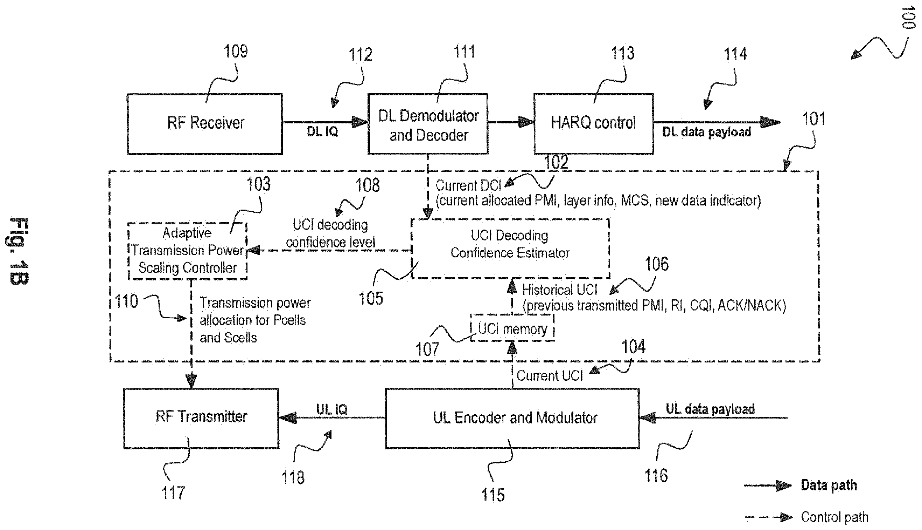

Fig. 1b is a high level block diagram of a user equipment (UE) 100 according to the disclosure. The UE 100 includes a receive path 109, 111, 113 with a radio frequency (RF) receiver 109 for receiving a downlink (DL) transmission, e.g. from a base station. The RF receiver 109 provides DL in-phase quadrature (IQ) data 112 to a DL demodulator and decoder 111 that demodulates and decodes the DL IQ data 112 to derive (current) DL control information (DCI) 102 from the DL IQ data 112. A HARQ (hybrid automatic repeat request) block 113 is coupled to the output of the DL demodulator and decoder 111 to provide DL data payload 114.

The UE 100 includes a transmit path 115, 117 with an uplink (UL) encoder and modulator 115 to encode and modulate UL data payload 116 in order to provide UL IQ data 118 to an RF transmitter 117 that transmits an uplink transmission which transmission power is adjusted by a power scaling 110.

The UE 100 further includes a control path 103, 105, 107 with a UCI decoding confidence estimator 105 that provides a UCI decoding confidence level 108 based on historical UCI data retrieved from a UCI memory 107 and current DCI data provided by the DL demodulator and decoder 111. The UCI memory 107 stores current UCI values provided by the UL encoder and modulator 115. The UCI memory 107 thus stores current and past UCI values that form the historical UCI values 106. The historical UCI values 106 may include previous transmitted PMI, RI, CQI and/or, ACK/NACK. The control path further includes an adaptive transmission power scaling controller 103 that generates a power scaling 110, e.g. a transmission power allocation for primary cells (Pcells) and secondary cells (Scells) when UL carrier aggregation is enabled, based on the UCI decoding confidence level 108 provided by the UCI decoding confidence estimator 105. The power scaling 110 is used to scale the transmission power of the RF transmitter 117.

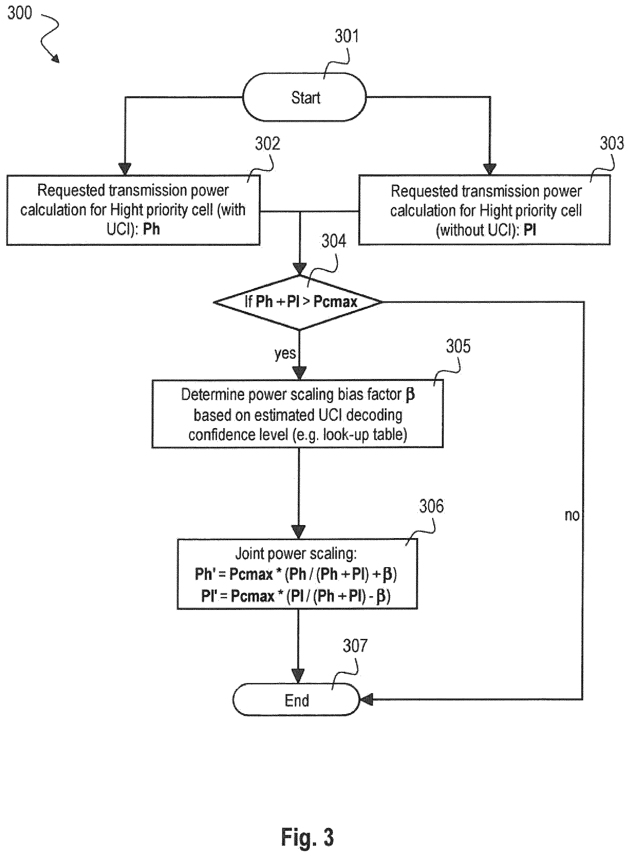

An exemplary implementation of the UCI decoding confidence estimator 105 is described below with respect to Fig. 2. An exemplary implementation of the adaptive transmission power scaling controller 103 is described below with respect to Fig. 3.

In the UL transmitter 117, the UCI containing PMI, RI, CQI, ACK/NACK information generated by the DL receiver 109 is transmitted to eNB, but also at the same time the UCI is stored into the UCI memory 107.

In the DL receiver 109, downlink control information (DCI) is decoded which contains the allocated precoding matrix information (correlated with previously reported PMI), downlink layer information (correlated with previously reported RI), MCS (correlated with previously reported CQI) and NDI (new data indicator for DL retransmissions, correlated with previously reported ACK/NACK). The DCI information is given to the UCI decoding confidence level estimator module 105. Meanwhile, the estimator module 105 also reads the previous UCI 106 from UCI memory 107, which should be mapped to the current DL control information 102.

The UCI decoding confidence estimator module 105 evaluates the correlations between the previously reported UCI 106 and actually currently allocated DCIs 102: e.g. calculate the statistics of "unexpected DL retransmission requests" by comparing previously reported ACK/NACK in UCI 106 with current indicated NDI in DCI 102; or (and) calculate the statistics of "unexpected RI" by comparing the assigned DL layers with previously reported RI; or (and) calculate the statistics of "unexpected PMI" by comparing previously reported PMI with current allocated DL pre-coding matrix. The statistics can be generated by a mismatch counter averaged by time, e.g. using a mismatch accumulator 203, 213, 223, 233 as described below with respect to Fig. 2. In particular, for CQI reports, although eNB does not need to strictly follow the reported CQI with the actual assigned MCS, still deeper exploration can be made by detecting the statistics of "over-optimistic DL MCS allocation": e.g. UE reported a very low CQI but eNB still assigns very high MCS, this observation may be used to lower down the UCI decoding confidence level. In the end, the statistics of each evaluation path can be weighted and combined to generate an overall estimate of the UCI decoding result on the eNB, e.g. by using the weighted averaging module 241 described below with respect to Fig. 2. One implementation for the estimator module 105 is shown and described below in Figure 2.

A prediction filter (IIR or FIR type) can be implemented on top, to combine the historical estimated confidence level with current estimated confidence level 108, this will smooth scaling bias change and will also enable faster tracking of field channel condition change.

The estimated (or predicted) UCI decoding confidence level 108 can now be used inside the transmission power scaling control module 103 to apply a bias factor, e.g. as described below with respect to Fig. 3. When the above estimated confidence level 108 indicates low error rate on UCI decoding, the bias factor may be close to 0 which results in a maximum power of P_{CMAX} /2 for each carrier. Thus no special priority may be given to the carrier with UCI since UE estimates that UCI is successfully decoded with a high probability on eNB. When the estimated confidence level 108 indicates high error rate of UCI decoding on eNB, the bias may tend towards 1 which means power of P_{CMAX} is given to carrier with UCI which is similar to the existing 3GPP scheme.

The control path 103, 105, 107 can be implemented by only changing control software of a common UE, no hardware changes are required. The UCI memory 107 and the "wrongly decoded UCI" detector 105 can be implemented in L1CC SW (layer 1 control core software), which already has the information for both UCI and DCI. The adaptive transmission power control module 103 can be merged into LTX transmission power control SW which calculates the actual transmission power for each carrier and provides this to RF transmitter 117.

Implementing such a control path in a UE increases the LTE UL performance for LTE modems, i.e. smoother and overall higher UL throughput for UL-CA case can be achieved, while carefully protecting LTE DL performance.

Fig. 2 is a block diagram illustrating a UCI decoding confidence estimator module 200 according to an implementation form.

The UCI decoding confidence estimator module 200 includes an exemplary number of four input paths for evaluating contributions of different components of the UCI 106, e.g. for evaluating current received NDI (new data indicator) 202, current allocated PMI (precoding matrix indicator) 212, current allocated layers 222 and current allocated DL MCS (downlink modulation and coding scheme) 232.

In the first input path, an unexpected retransmission detection module 201 compares the current received NDI 202 against previous transmitted ACK/NACK (Acknowledgemts/Non-Acknowledgements) 204 to provide mismatches which are counted by a mismatch accumulator 203 and normalized by a time normalization module 205 to provide a first weight W1.

In the second input path, a PMI mismatch detection module 211 compares the current allocated PMI 212 against previous transmitted PMI 214 to provide mismatches which are counted by a mismatch accumulator 213 and normalized by a time normalization module 215 to provide a second weight W2.

In the third input path, a RI mismatch detection module 221 compares the current allocated layers 222 against previous transmitted RI 224 to provide mismatches which are counted by a mismatch accumulator 223 and normalized by a time normalization module 225 to provide a third weight W3.

In the fourth input path, an over-optimistic MCS detection module 231 compares the current allocated DL MCS 232 against previous transmitted CQI 234 to provide mismatches which are counted by a mismatch accumulator 233 and normalized by a time normalization module 235 to provide a fourth weight W4.

The UCI decoding confidence estimator module 200 further includes a weighted averaging module 241 that weights and averages the four weights W1, W2, W3 and W4 received from the four input paths to provide an overall UCI decoding confidence level 242 that may correspond to the UCI decoding confidence level 108 described above with respect to Fig. 1b.

Fig. 3 is a schematic diagram illustrating an exemplary control flow for an adaptive transmission power scaling controller module 300 according to an implementation form.

After start 301 either transmission power calculation is requested 302 for high priority cell Ph (with UCI), also referred to as primary cell, or transmission power calculation is requested 303 for low priority cell Pl (without UCI), also referred to as secondary cell. For both cases a check module 304 checks if the sum of Ph and Pl is above Pcmax. If not, the control flow ends 307. If yes, a power scaling bias factor β is determined 305 based on estimated UCI decoding confidence level, e.g. by applying a look-up table. Then, a joint power scaling 306 is performed according to the formulas: Ph'=Pcmax^{∗}(Ph/(Ph+Pl)+β) and Pl'=Pcmax^{∗}(Pl/(Ph+Pl)-β) and the control flow ends 307. Ph' is the updated high priority cell and Pl' is the updated low priority cell Pl. These power scaling factors may correspond to the transmission power allocation 110 for Pcells and Scells described above with respect to Fig. 1b.

With respect to Fig. 3, the estimated UCI decoding confidence level (108 according to Fig. 1b or 242 according to Fig. 2) can be mapped to a power scaling bias factor β (this mapping can be done through a look-up table operation), which gives the bias term for the adaptive transmission power scaling formulas described above: when the estimated confidence level indicates low error rate on UCI decoding, lower β is selected so that more transmission power is allocated to low priority cell (Pl', without UCI), this protects the UL throughput; When the estimated confidence level indicates high error rate of UCI decoding on eNB, higher β is selected so that more transmission power is allocated to high priority cell (Ph', with UCI). This protects UCI decoding and thus also the DL throughput.

In particular, there are two extreme cases: In a first extreme case, the result is Ph' = Pmax which gives full UCI protection. In a second extreme case, the result is equal scaling between Ph and Pl which is optimal for UL throughput.

The disclosed concept can also be extended for UL payload data robustness improvement. That is done by adaptive transmission power scaling based on the requested UL retransmissions, when the eNB requested transmission power sum exceeds Pcmax.

The disclosed concept can also be extended for other LTE multi-carrier transmission scenarios, for example Dual SIM Dual Active (DSDA), when the requested transmission power sum of two SIMs exceeds Pcmax.

The disclosed concept is shown in Figure 3 for the case of 2 Uplink carriers aggregation but can easily be extended for more than 2 aggregated carriers in the Uplink.

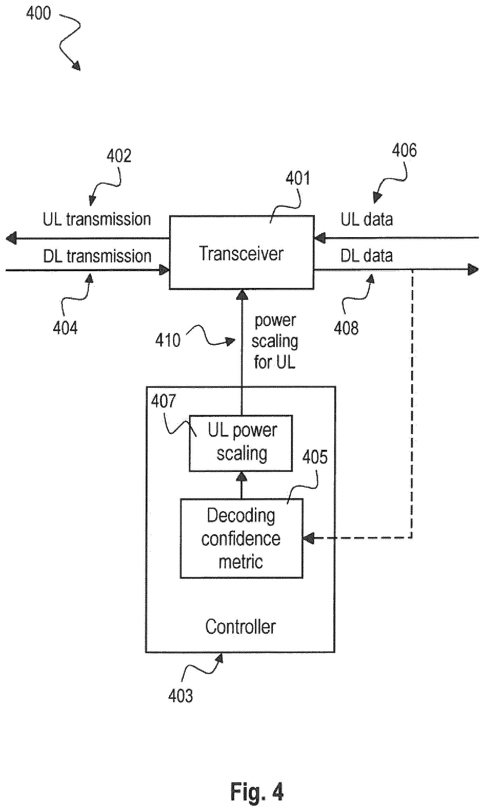

Fig. 4 is a block diagram of a User Equipment (UE) 400 according to an implementation form. The UE 400 includes a transceiver 401 and a controller 403. The transceiver 401 is configured to receive a Downlink (DL) transmission 404 from a base station (BS) and to transmit an Uplink (UL) transmission 402 to the BS. The controller 403 is configured to determine a decoding confidence of the BS based on a decoding confidence metric 405 with respect to the received DL transmission 408 (in particular DL data 408 derived from the DL transmission 404) and to generate 407 a power scaling 410 for the UL transmission 402 (in particular for UL data 406 for forming the UL transmission 402) based on the determined decoding confidence. The transceiver 401 is configured to transmit the UL transmission 402 based on the power scaling 410 generated by the controller 403.

The transceiver 401 may correspond to the blocks RF Receiver 109 and RF transmitter 117 described above with respect to Fig. 1b and may additionally include the blocks DL Demodulator and Decoder 111 and UL Encoder and Modulator 115 described above with respect to Fig. 1b.

The decoding confidence metric 405 may be based on counting unexpected DL retransmission requests, e.g. as described above with respect to Figures 1 to 3.

The decoding confidence metric may be based on counting instances when the BS did not follow one of precoding matrix indication (PMI) or rank indication (RI) reports sent by the UE, e.g. as described above with respect to Figures 1 to 3. The decoding confidence metric may be based on counting instances when the BS schedules an over-optimistic modulation and coding set (MCS) allocation, e.g. as described above with respect to Figures 1 to 3.

The controller 403 may be configured to reduce the power scaling for the UL transmission when determining an increased decoding confidence of the BS and to increase the power scaling for the UL transmission when determining a reduced decoding confidence of the BS, e.g. as described above with respect to Figures 1 to 3.

The decoding confidence metric may be based on a confidence of decoding Uplink Control Information (UCI) by the BS, e.g. as described above with respect to Figures 1 to 3.

The transceiver 401 may be configured to transmit the UL transmission comprising the UCI unprotected by error correction coding, e.g. as described above with respect to Figures 1 to 3.

The controller 403 may be configured to generate the power scaling 410 in a carrier aggregation scenario for an UL transmission 402 comprising a first UL transmission directed to a primary cell and at least one secondary UL transmission directed to at least one secondary cell, wherein the first UL transmission carries the UCI, e.g. as described above with respect to Figures 1 to 3.

The controller 403 may be configured to down-scale the power scaling 410 for the first UL transmission and to upscale the power scaling 410 for the at least one secondary UL transmission when a total configured maximum output power of the UL transmission crosses a threshold, e.g. as described above with respect to Figures 1 to 3.

The controller 403 may be configured to reduce the power scaling 410 for the first UL transmission and to correspondingly increase the power scaling for the at least one secondary UL transmission when determining an increased decoding confidence of the BS and to increase the power scaling 410 for the first UL transmission and to correspondingly reduce the power scaling 410 for the at least one secondary UL transmission when determining a reduced decoding confidence of the BS, e.g. as described above with respect to Figures 1 to 3.

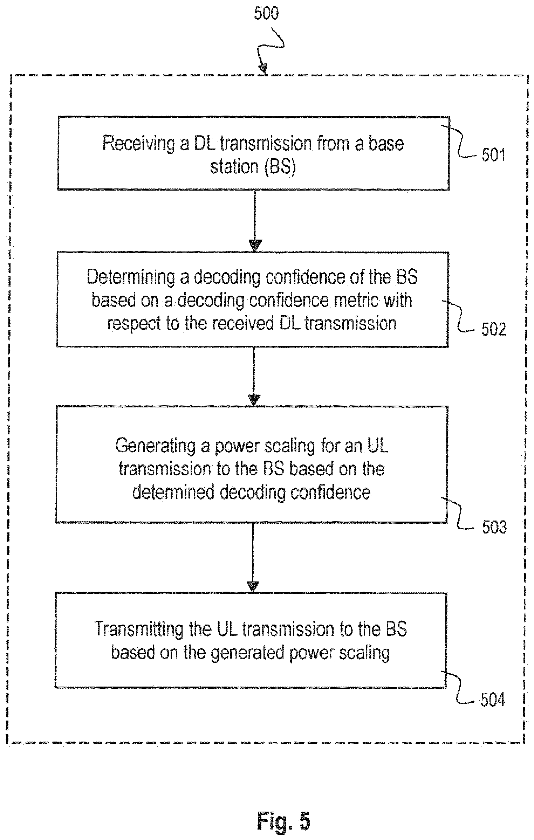

Fig. 5 is a schematic diagram of a method 500 for power scaling of a User Equipment (UE) according to an implementation form.

The method 500 includes receiving 500 a Downlink (DL) transmission from a base station (BS); determining 502 a decoding confidence of the BS based on a decoding confidence metric with respect to the received DL transmission; generating 503 a power scaling for an Uplink (UL) transmission to the BS based on the determined decoding confidence; and transmitting 504 the UL transmission to the BS based on the generated power scaling. The method 500 may implement the functionality of the UE 400 described above with respect to Fig. 4.

The decoding confidence may indicate a confidence of decoding an Uplink Control Information (UCI) by the BS, wherein the UCI is included in the UL transmission.

The decoding confidence metric may be based on Downlink Control Information (DCI) included in the DL transmission, e.g. as described above with respect to Fig. 4.

Determining 502 the decoding confidence may include determining unexpected DL retransmission requests based on a comparison of a previously reported Acknowledgement (ACK) or Non-Acknowledgement (NACK) in the UCI with a current indicated New Data Indicator (NDI) in the DCI, e.g. as described above with respect to Fig. 4.

Determining 502 the decoding confidence may include determining unexpected Rank Indicators (RIs) based on a comparison of assigned DL layers with previously reported RIs, e.g. as described above with respect to Fig. 4.

Determining 502 the decoding confidence may include determining unexpected Precoding Matrix Indicators (PMIs) based on a comparison of previous reported PMIs with a current allocated DL precoding matrix, e.g. as described above with respect to Fig. 4.

Determining 502 the decoding confidence may include determining an overoptimistic Modulation and Coding Scheme (MCS) allocation based on a comparison of a current allocated DL MCS with a previous transmitted Channel Quality Indicator (CQI), e.g. as described above with respect to Fig. 4.

The method 500 may further include: using respective mismatch counters for determining the unexpected DL retransmission requests, the unexpected RIs, the unexpected PMIs and the overoptimistic MCS allocation, e.g. as described above with respect to Fig. 4.

The method 500 may further include: determining an overall UCI decoding confidence level based on a combined weighted averaging of the respective mismatch counters.

The method 500 may further include: determining a power scaling bias factor based on the overall UCI decoding confidence level.

The power scaling bias factor may be close to zero when the overall UCI decoding confidence level indicates low error rate on UCI decoding and may be close to one when the overall UCI decoding confidence level indicates a high error rate on UCI decoding.

The method 500 may further include: predicting a future decoding confidence of the BS based on a combination of at least one previously determined decoding confidence of the BS and a currently determined decoding confidence of the BS.

The power scaling as presented in this disclosure can be checked by creating a lab setup where the UE is connected with cable (i.e. very good channel conditions available) to an eNB or an eNB simulator. eNB should be configured to set Uplink carrier aggregation on the UE. Once Uplink CA is activated the eNB continuously schedules uplink grants with fixed allocation (RBs) and MCS on both carriers and also schedules DL traffic on one or both carriers. eNB does not configure simultaneous PUCCH-PUSCH. As a result the primary cell PUSCH will carry UCI. Further the requested power on each cell can be forced to P_{CMAX} by sending TPC up commands from eNB. The power of PCell and SCell can be noted at this point. Then eNB can be forced to trigger DL retransmissions even if the UE reports ACK on the UL. If the observed PCell transmission power from the same UE is reduced compared to previous step, although the requested transmission power from eNB stays unchanged, the UE has correctly implemented the power scaling according to the disclosure.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 500 described above with respect to Fig. 5 and the computing blocks described above with respect to Figures 1 to 4. Such a computer program product may include a non-transient readable storage medium storing program code thereon for use by a processor, the program code comprising instructions for performing the methods or the computing blocks as described above.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A User Equipment (UE) (400), comprising:
a transceiver (401), configured to receive a Downlink (DL) transmission (404) from a base station (BS) and to transmit an Uplink (UL) transmission (402) to the BS; and
a controller (403), configured to determine a decoding confidence of the BS based on a decoding confidence metric (405) with respect to the received DL transmission (404) and to generate a power scaling (407) for the UL transmission (402) based on the determined decoding confidence,
wherein the transceiver (401) is configured to transmit the UL transmission (402) based on the power scaling (407) generated by the controller (403),
wherein the decoding confidence metric (405) is based on a confidence of decoding Uplink Control Information (UCI) by the BS,
wherein the controller (403) is configured to generate the power scaling (407) in a carrier aggregation scenario for an UL transmission comprising a first UL transmission directed to a primary cell and at least one secondary UL transmission directed to at least one secondary cell, wherein the first UL transmission carries the UCI, and
wherein the controller (403) is configured to reduce the power scaling for the first UL transmission and to correspondingly increase the power scaling for the at least one secondary UL transmission when determining an increased decoding confidence of the BS and to increase the power scaling for the first UL transmission and to correspondingly reduce the power scaling for the at least one secondary UL transmission when determining a reduced decoding confidence of the BS.

2. The UE (100) of claim 1,
wherein the decoding confidence metric (405) is based on determining unexpected DL retransmission requests (201) based on a comparison of a previously reported Acknowledgement (ACK) or Non-Acknowledgement (NACK) in the UCI with a current indicated New Data Indicator (NDI) in a Downlink Control Information (DCI) comprised in the DL transmission (404).

3. The UE (100) of claim 1 or 2,
wherein the decoding confidence metric (405) is based on counting instances when the BS did not follow one of precoding matrix indication (PMI) or rank indication (RI) reports sent by the UE.

4. The UE (100) of one of the preceding claims,
wherein the decoding confidence metric (405) is based on counting instances when the BS schedules an over-optimistic modulation and coding set (MCS) allocation (231) by means of a comparison of currently allocated DL MCS (232) against a previously transmitted Channel Quality Indicator, CQI (234).

5. The UE (100) of one of the preceding claims,
wherein the transceiver (401) is configured to transmit the UL transmission (402) comprising the UCI unprotected by error correction coding.

6. The UE (100) of one of the preceding claims,
wherein the controller (403) is configured to down-scale the power scaling (407) for the first UL transmission and to upscale the power scaling (407) for the at least one secondary UL transmission when a total configured maximum output power of the UL transmission (402) crosses a threshold.

7. A method (500) for power scaling of a user equipment (UE), the method (500) comprising:
receiving (501) a Downlink (DL) transmission from a base station (BS);
determining (502) a decoding confidence of the BS based on a decoding confidence metric with respect to the received DL transmission, wherein the decoding confidence metric is based on a confidence of decoding Uplink Control Information (UCI) by the BS;
generating (503) a power scaling for an Uplink (UL) transmission to the BS based on the determined decoding confidence, wherein the power scaling is generated in a carrier aggregation scenario for an UL transmission comprising a first UL transmission directed to a primary cell and at least one secondary UL transmission directed to at least one secondary cell, wherein the first UL transmission carries the UCI;
reducing the power scaling for the first UL transmission and correspondingly increasing the power scaling for the at least one secondary UL transmission when determining an increased decoding confidence of the BS and increasing the power scaling for the first UL transmission and correspondingly reducing the power scaling for the at least one secondary UL transmission when determining a reduced decoding confidence of the BS; and
transmitting (504) the UL transmission to the BS based on the generated power scaling.

8. The method (500) of claim 7,
wherein determining (502) the decoding confidence comprises determining unexpected Rank Indicators (RIs) based on a comparison of assigned DL layers (222) with previously reported RIs (224).

9. The method (500) of claim 7,
wherein determining (502) the decoding confidence comprises determining unexpected DL retransmission requests based on a comparison of a previously reported Acknowledgement (ACK) or Non-Acknowledgement (NACK) (204) in the UCI with a current indicated New Data Indicator (NDI) (202) in the DCI.

10. A computer readable non-transitory medium on which computer instructions are stored which when executed by a computer cause the computer to perform the method (500) of any one of claims 7 to 9.

## Patentansprüche

1. Benutzergerät (UE) (400), umfassend:
einen Sender-Empfänger (401), der dazu ausgelegt ist, eine Downlink-(DL)-Sendung (404) von einer Basisstation (BS) zu empfangen und eine Uplink-(UL)-Sendung (402) an die BS zu senden; und
eine Steuerung (403), die dazu ausgelegt ist, ein Decodierungsvertrauen des BS basierend auf einer Decodierungsvertrauensmetrik (405) in Bezug auf die empfangene DL-Sendung (404) zu bestimmen und eine Leistungsskalierung (407) für die UL-Sendung (402) basierend auf der bestimmten Decodierungsvertrauen zu erzeugen,
wobei der Sender-Empfänger (401) dazu ausgelegt ist, die UL-Sendung (402) basierend auf der von der Steuerung (403) erzeugten Leistungsskalierung (407) zu senden,
wobei die Decodierungsvertrauensmetrik (405) auf einem Vertrauen in die Decodierung von Uplink-Steuerinformationen (UCI) durch den BS basiert,
wobei die Steuerung (403) dazu ausgelegt ist, die Leistungsskalierung (407) in einem Trägeraggregationsszenario für eine UL-Sendung zu erzeugen, umfassend eine erste UL-Sendung, die auf eine Primärzelle gerichtet ist, und mindestens eine sekundäre UL-Sendung, die auf mindestens eine Sekundärzelle gerichtet ist, wobei die erste UL-Sendung die UCI trägt, und
wobei die Steuerung (403) dazu ausgelegt ist, die Leistungsskalierung für die erste UL-Sendung zu reduzieren und die Leistungsskalierung für die mindestens eine sekundäre UL-Sendung entsprechend zu erhöhen, wenn ein erhöhtes Decodierungsvertrauen der BS bestimmt wird, und die Leistungsskalierung für die erste UL-Sendung zu erhöhen und die Leistungsskalierung für die mindestens eine sekundäre UL-Sendung beim Bestimmen eine reduzierten Decodierungsvertrauens der BS entsprechend zu reduzieren.

2. UE (100) nach Anspruch 1,
wobei die Decodierungsvertrauensmetrik (405) auf dem Bestimmen von unerwarteten DL-Sendewiederholungsanforderung (201) basierend auf einem Vergleich einer zuvor gemeldeten Bestätigung (ACK) oder Nichtbestätigung (NACK) in der UCI mit einem aktuell angezeigten "New Data Indicator" (NDI) in einer "Downlink Control Information" (DCI) basiert, die in der DL-Sendung (404) umfasst ist.

3. UE (100) nach Anspruch 1 oder 2,
wobei die Decodierungsvertrauensmetrik (405) auf Zählinstanzen basiert, wenn die BS nicht einem von dem UE gesendeten Vorcodierungsmatrixangabe-(PMI)- oder Ranganzeige-(RI)-Bericht gefolgt ist

4. UE (100) nach einem der vorstehenden Ansprüche,
wobei die Decodierungsvertrauensmetrik (405) auf Zählinstanzen basiert, wenn die BS eine überoptimistische Modulations- und Codierungssatz-(MCS)-Zuordnung (231) mittels eines Vergleichs des aktuell zugewiesenen DL MCS (232) mit einem zuvor gesendeten Kanalqualitätsindikator, CQI (234), plant.

5. UE (100) nach einem der vorstehenden Ansprüche,
wobei der Sender-Empfänger (401) dazu ausgelegt ist, die UL-Sendung (402) zu senden, die die durch Fehlerkorrektur-Codierung ungeschützte UCI umfasst.

6. UE (100) nach einem der vorstehenden Ansprüche,
wobei die Steuerung (403) dazu ausgelegt ist, die Leistungsskalierung (407) für die erste UL-Sendung herunter zu skalieren und die Leistungsskalierung (407) für die mindestens eine sekundäre UL-Sendung hoch zu skalieren, wenn eine insgesamt ausgelegte maximale Ausgangsleistung der UL-Sendung (402) einen Schwellenwert überschreitet.

7. Verfahren (500) zur Leistungsskalierung eines Benutzergeräts (UE), wobei das Verfahren (500) umfasst:
Empfangen (501) einer Downlink-(DL)-Sendung von einer Basisstation (BS);
Bestimmen (502) eines Decodierungsvertrauens der BS basierend auf einer Decodierungsvertrauensmetrik in Bezug auf die empfangene DL-Sendung, wobei die Decodierungsvertrauensmetrik auf einem Vertrauen in die Decodierung von Uplink-Steuerinformationen (UCI) durch die BS basiert;
Erzeugen (503) einer Leistungsskalierung für eine Uplink-(UL)-Sendung an die BS basierend auf dem bestimmten Decodierungsvertrauen, wobei die Leistungsskalierung in einem Trägeraggregationsszenario für eine UL-Sendung erzeugt wird, umfassend eine erste UL-Sendung, die auf eine Primärzelle gerichtet ist, und mindestens eine sekundäre UL-Sendung, die auf mindestens eine Sekundärzelle gerichtet ist, wobei die erste UL-Sendung die UCI trägt;
Reduzieren der Leistungsskalierung für die erste UL-Sendung und entsprechendes Erhöhen der Leistungsskalierung für die mindestens eine sekundäre UL-Sendung beim Bestimmen eines erhöhten Decodierungsvertrauens der BS und Erhöhen der Leistungsskalierung für die erste UL-Sendung und entsprechendes Reduzieren der Leistungsskalierung für die mindestens eine sekundäre UL-Sendung beim Bestimmen eines reduzierten Decodierungsvertrauens der BS; und
Senden (504) der UL-Sendung an die BS basierend auf der erzeugten Leistungsskalierung.

8. Verfahren (500) nach Anspruch 7,
wobei das Bestimmen (502) des Decodierungsvertrauens das Bestimmen unerwarteter Rangangaben (RIs) basierend auf einem Vergleich der zugeordneten DL-Schichten (222) mit zuvor berichteten RIs (224) umfasst.

9. Verfahren (500) nach Anspruch 7,
wobei das Bestimmen (502) des Decodierungsvertrauens das Bestimmen unerwarteter DL-Sendewiederholungsanforderungen basierend auf einem Vergleich einer zuvor gemeldeten Bestätigung (ACK) oder Nicht-Bestätigung (NACK) (204) in der UCI mit einem aktuell angezeigten "New Data Indicator" (NDI) (202) in der DCI umfasst.

10. Computerlesbares, nicht-flüchtiges Medium, auf dem Computeranweisungen gespeichert sind, die bei Ausführung durch einen Computer den Computer veranlassen, das Verfahren (500) nach einem der Ansprüche 7 bis 9 durchzuführen.

## Revendications

1. Équipement d'utilisateur (UE) (400), comprenant :
un émetteur-récepteur (401), configuré pour recevoir une émission en liaison descendante (DL) (404) en provenance d'une station de base (BS) et pour émettre une émission en liaison montante (UL) (402) vers la BS ; et
un contrôleur (403), configuré pour déterminer une confiance de décodage de la BS sur la base d'un indicateur métrique de confiance de décodage (405) par rapport à l'émission DL reçue (404), et pour générer un échelonnement de puissance (407) pour l'émission UL (402) sur la base de la confiance de décodage déterminée,
l'émetteur-récepteur (401) étant configuré pour émettre l'émission UL (402) sur la base de l'échelonnement de puissance (407) généré par le contrôleur (403),
l'indicateur métrique de confiance de décodage (405) étant basé sur une confiance d'une information de contrôle en liaison montante (UCI) de décodage par la BS,
le contrôleur (403) étant configuré pour générer l'échelonnement de puissance (407) dans un scénario d'agrégation de porteuses pour une émission UL comprenant une première émission UL dirigée vers une cellule principale et au moins une émission UL secondaire dirigée vers au moins une cellule secondaire, la première émission UL transportant l'UCI, et
le contrôleur (403) étant configuré pour réduire l'échelonnement de puissance pour la première émission UL et pour augmenter parallèlement l'échelonnement de puissance pour l'au moins une émission UL secondaire quand il est déterminé une augmentation de la confiance de décodage de la BS, et pour augmenter l'échelonnement de puissance pour la première émission UL et pour réduire parallèlement l'échelonnement de puissance pour l'au moins une émission UL secondaire quand il est déterminé une réduction de la confiance de décodage de la BS.

2. UE (100) selon la revendication 1,
dans lequel l'indicateur métrique de confiance de décodage (405) est basé sur la détermination de demandes de réémission DL non prévues (201) sur la base d'une comparaison d'un accusé de réception (ACK) ou d'un accusé de réception négatif (NACK) signalé préalablement dans l'UCI à un nouvel indicateur de données (NDI) courant indiqué dans une information de contrôle en liaison descendante (DCI) comprise dans l'émission DL (404).

3. UE (100) selon la revendication 1 ou 2,
dans lequel l'indicateur métrique de confiance de décodage (405) est basé sur le décompte d'instances quand la BS n'a pas suivi un rapport parmi un rapport d'indication de matrice de précodage (PMI) et un rapport d'indication de rang (RI) envoyés par l'UE.

4. UE (100) selon l'une quelconque des revendications précédentes,
dans lequel l'indicateur métrique de confiance de décodage (405) est basé sur le décompte d'instances quand la BS planifie une affectation (231) d'un schéma de modulation et de codage (MCS) trop optimiste au moyen d'une comparaison d'un MCS DL (232) actuellement affecté à un indicateur de qualité de canal (CQI) (234) transmis préalablement.

5. UE (100) selon l'une quelconque des revendications précédentes,
dans lequel l'émetteur-récepteur (401) est configuré pour émettre l'émission UL (402) comprenant l'UCI non protégée par un codage par correction d'erreur.

6. UE (100) selon l'une quelconque des revendications précédentes,
dans lequel le contrôleur (403) est configuré pour sous-échelonner l'échelonnement de puissance (407) pour la première émission UL et pour suréchelonner l'échelonnement de puissance (407) pour l'au moins une émission UL secondaire quand une puissance de sortie maximale configurée totale de l'émission UL (402) franchit un seuil.

7. Procédé (500) d'échelonnement de puissance d'un équipement d'utilisateur (UE), le procédé (500) consistant à :
recevoir (501) une émission en liaison descendante (DL) en provenance d'une station de base (BS) ;
déterminer (502) une confiance de décodage de la BS sur la base d'un indicateur métrique de confiance de décodage par rapport à l'émission DL reçue, l'indicateur métrique de confiance de décodage étant basé sur une confiance d'une information de contrôle en liaison montante (UCI) de décodage par la BS ;
générer (503) un échelonnement de puissance pour une émission en liaison montante (UL) vers la BS sur la base de la confiance de décodage déterminée, l'échelonnement de puissance étant généré dans un scénario d'agrégation de porteuses pour une émission UL comprenant une première émission UL dirigée vers une cellule principale et au moins une émission UL secondaire dirigée vers au moins une cellule secondaire, la première émission UL transportant l'UCI ;
réduire l'échelonnement de puissance pour la première émission UL et augmenter parallèlement l'échelonnement de puissance pour l'au moins une émission UL secondaire quand il est déterminé une augmentation de la confiance de décodage de la BS, et augmenter l'échelonnement de puissance pour la première émission UL et réduire parallèlement l'échelonnement de puissance pour l'au moins une émission UL secondaire quand il est déterminé une réduction de la confiance de décodage de la BS ; et
émettre (504) l'émission UL vers la BS sur la base de l'échelonnement de puissance généré.

8. Procédé (500) selon la revendication 7,
dans lequel la détermination (502) de la confiance de décodage consiste à déterminer des indicateurs de rang (RI) non prévus sur la base d'une comparaison de couches DL (222) affectées à des RI (224) signalés préalablement.

9. Procédé (500) selon la revendication 7,
dans lequel la détermination (502) de la confiance de décodage consiste à déterminer des demandes de réémission DL non prévues sur la base d'une comparaison d'un accusé de réception (ACK) ou d'un accusé de réception négatif (NACK) (204) signalé préalablement dans l'UCI à un nouvel indicateur de données (NDI) (202) courant indiqué dans la DCI.

10. Support non temporaire et lisible par ordinateur sur lequel sont stockées des instructions informatiques qui, lorsqu'elles sont exécutées par un ordinateur, amènent l'ordinateur à réaliser le procédé (500) selon l'une quelconque des revendications 7 à 9.
